# EUROPÄISCHE PATENTSCHRIFT

(11) **EP 0 743 226 B1**
(45) Veröffentlichungstag und Bekanntmachung des Hinweises auf die Patenterteilung: **12.07.2000**
(21) Anmeldenummer: 96104638.0
(22) Anmeldetag: 23.03.1996
(51) Int. Cl.: B60Q 1/04

(54) **Leuchtengehäuse**
Light fixture housing
Boîtier de luminaire

(30) Priorität: 15.05.1995 DE 19517783
(43) Veröffentlichungstag der Anmeldung: 20.11.1996
(73) Patentinhaber: DaimlerChrysler AG, 70567 Stuttgart (DE)
(72) Erfinder: Gerstner, Harald, 71134 Aidlingen 1 (DE); Jocher, Reiner, 71134 Aidlingen 1 (DE)

(56) Entgegenhaltungen:
- EP-A- 0 679 553
- US-A- 2 138 076
- US-A- 4 318 161

## Beschreibung

Die Erfindung betrifft ein Leuchtengehäuse, das in eine zwischen wenigstens zwei Karosserieteilen vorgesehene Leuchtenöffnung einsetzbar und an drei zueinander beabstandeten Befestigungspunkten im Bereich eines Außenumfangs des Leuchtengehäuses karosseriefest verbindbar ist, wobei jedem Befestigungspunkt eine Justiereinrichtung zum Zentrieren des Leuchtengehäuses in der Leuchtenöffnung und relativ zu den Karosserieteilen zugeordnet ist.

Aus der DE 42 28 889 A1 ist ein Leuchtengehäuse für einen Frontscheinwerfer eines Personenkraftwagens bekannt, das mit drei über den Außenumfang des Leuchtengehäuses verteilt angeordneten Befestigungspunkten zur Fixierung des Leuchtengehäuses an der Fahrzeugkarosserie versehen ist. Jedem der drei Befestigungspunkte ist jeweils eine Justiereinrichtung zugeordnet. Die Befestigungsachsen aller drei Befestigungspunkte und damit auch die Justierachsen aller Justiereinrichtungen sind achsparallel zueinander ausgerichtet. Alle drei Justiereinrichtungen weisen ein ausreichendes radials Spiel auf, durch die eine Justierung in einer zu den Befestigungsachsen lotrechten Ebene von Hand ermöglicht wird.

Die gattungsbildende DE 36 29 124 C1 offenbart ein weiteres Leuchtengehäuse für einen Frontscheinwerfer eines Personenkraftwagens, das ebenfalls mit Hilfe von drei Befestigungspunkten karosseriefest fixierbar ist. Die Befestigungsachsen zweier oberer Befestigungspunkte sind achsparallel zueinander ausgerichtet, die Befestigungsachse des unteren Befestigungspunktes ist lotrecht zu diesen oberen Befestigungsachsen angeordnet. Ein Toleranzausgleich ist bei diesem Leuchtengehäuse nur begerenzt möglich.

Es ist auch bekannt, ein Leuchtengehäuse für einen Frontscheinwerfer eines Personenkraftwagens in einer Karosserieöffnung zu positionieren und an mehreren Befestigungspunkten mit den die Karosserieöffnung umgrenzenden Karosserieteilen zu verbinden. Einer dieser Befestigungspunkte ist mit einer Verstellschraube versehen, mittels der die Position des Leuchtengehäuses relativ zu den angrenzenden Karosserieteilen justierbar ist. Durch diese Verstellschraube können Zentrierungstoleranzen des Leuchtengehäuses relativ zu der Karosserieöffnung jedoch lediglich in geringem Ausmaß ausgeglichen werden.

Aufgabe der Erfindung ist es, ein Leuchtengehäuse der eingangs genannten Art zu schaffen, das einen verbesserten Toleranzausgleich bei einem Einbau in eine Karosserieöffnung einer Fahrzeugkarosserie gewährleistet.

Diese Aufgabe wird dadurch gelöst, daß jede Justiereinrichtung radial und axial zu der jeweiligen Befestigungsachse justierbar ist, und daß die Befestigungsachsen und damit die Justiereinrichtungen untereinander entsprechend einem dreidimensionalen Koordinatensystem jeweils lotrecht zueinander ausgerichtet sind. Dadurch wird eine verbesserte Justierung des Leuchtengehäuses relativ zu den an die Leuchtenöffnung angrenzenden Karosserieteilen erzielt. Durch die Justiereinrichtungen in jedem Befestigungspunkt ist es nämlich möglich, das Leuchtengehäuses im Bereich jedes einzelnen Befestigungspunktes dreidimensional zu justieren, d.h. relativ zu den angrenzenden Karosserieteilen weiter nach außen oder nach innen, weiter nach links oder nach rechts, oder weiter nach oben oder nach unten zu versetzen. Durch die erfindungsgemäße Lösung ist es somit möglich, die Fugenabstände rund um das Leuchtengehäuse zu den Karosserieaußenteilen hin weitgehend toleranzfrei zu justieren. Dies ist insbesondere von Vorteil, wenn das Leuchtengehäuse in einer Leuchtenöffnung in einem Karosserievorbau eines Personenkraftwagens angeordnet ist, die von verschiedenen Außenhautkarosserieteilen wie Kotflügel, Motorhaube, Verblendung oder Stoßfänger begrenzt wird. Durch die Anordnung der Befestigungsachsen der Befestigungspunkte in einem dreidimensionalen Koordinatensystem ergänzen sich die drei Befestigungspunkte so zueinander, daß zur Justierung des Leuchtengehäuses ein Toleranzausgleich in allen sechs Freiheitsgraden, d.h. in dreidimensionaler Form, ermöglicht wird, ohne daß die jeweils eingestellte Justierung während des Justiervorgangs zusätzlich von Hand fixiert werden muß.

In Ausgestaltung der Erfindung weisen die leuchtengehäuseseitigen Befestigungselemente im Bereich der Befestigungspunkte jeweils eine Gewindebohrung auf, in die eine Buchsenschraube verstellbar eingeschraubt ist, deren axiale Länge größer ist als die der Gewindebohrung und die mittels einer Schrauben-Mutter-Verbindung karosseriefest fixierbar ist. Dies ist eine besonders einfache und funktionssichere Justiereinrichtung in jedem Befestigungspunkt. Durch die Buchsenschraube ist es möglich, Toleranzen des Leuchtengehäuses entlang der Befestigungsachse des Befestigungspunktes auszugleichen, indem in einfacher Weise die Buchsenschraube verdreht wird.

In weiterer Ausgestaltung der Erfindung ist als Mutter der Schrauben-Mutter-Verbindung eine auf einem karosseriefesten Halter verschiebbare, klammerartige Blechmutter vorgesehen, wobei die Aufnahmeöffnung in dem Halter größer ist als der Durchmesser der Schraube der Schrauben-Mutter-Verbindung. Dadurch, daß die Aufnahmeöffnung in dem Halter größer ist als der Durchmesser der Schraube, ist es möglich, die Blechmutter im Bereich dieser Aufnahmeöffnung zu verschieben und dennoch eine sichere Schrauben-Mutter-Verbindung zu erzielen. Dadurch wird ein Toleranzausgleich in der Ebene der Aufnahmeöffnung des Halters geschaffen.

Nachfolgend ist ein bevorzugtes Ausführungsbeispiel der Erfindung beschrieben und anhand der Zeichnungen dargestellt.
- Fig. 1: zeigt eine perspektivische und teilweise aufgeschnittene Darstellung einer Ausführungsform eines erfindungsgemäßen Leuchtengehäuses, das in einer Leuchtenöffnung in einem Vorbau eines Personenkraftwagens angeordnet ist,
- Fig. 2: einen Schnitt durch einen ersten unteren Befestigungspunkt des Leuchtengehäuses in der Schnittebene II-II in Fig. 1,
- Fig. 3: einen Schnitt durch einen weiteren, oberen Befestigungspunkt des Leuchtengehäuses in der Schnittebene III-III in Fig. 1, und
- Fig. 4: einen Schnitt durch den dritten Befestigungspunkt des Leuchtengehäuses entlang der Schnittebene IV-IV in Fig. 1.

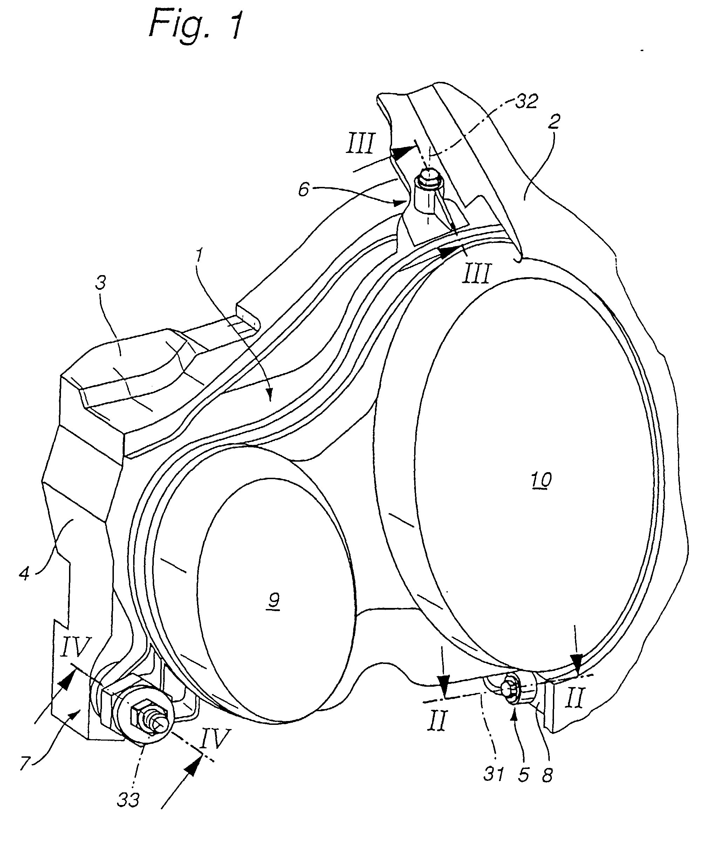

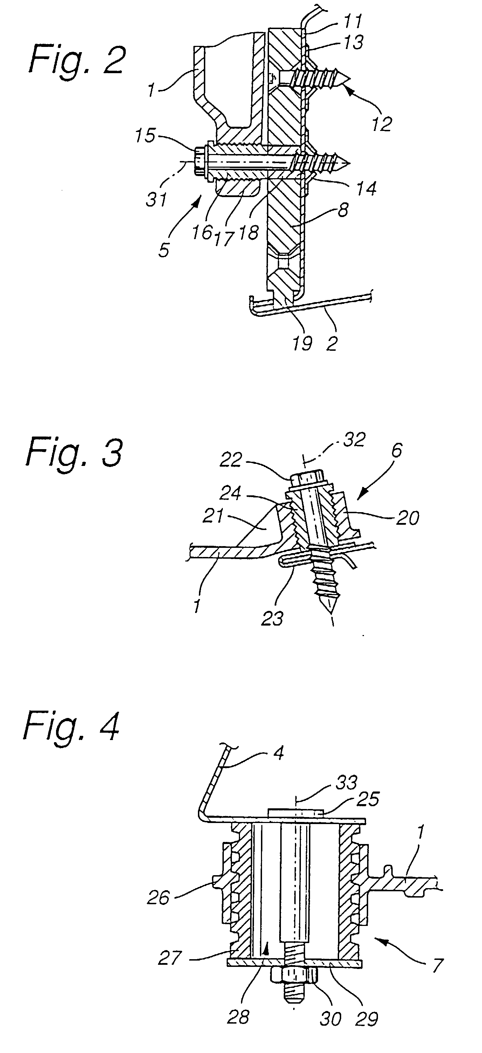

Ein Leuchtengehäuse (1) nach Fig. 1 dient zur Aufnahme eines Doppelscheinwerfers (9, 10), der zwei nebeneinander angeordnete, ellipsenförmige Streuscheiben (9 und 10) aufweist. Das Leuchtengehäuse (1) ist in einer Leuchtenöffnung in einem Karosserievorbau eines Personenkraftwagens im Frontbereich des Personenkraftwagens angeordnet. Die Leuchtenöffnung (1) stellt eine Karosserieöffnung dar, die von mehreren Außenhautkarosserieteilen begrenzt wird. Als die Leuchtenöffnung begrenzende Außenhautkarosserieteile sind beim Ausführungsbeispiel seitlich nach außen ein Kotflügel (2), nach oben eine nicht dargestellte Motorhaube, seitlich nach innen ein Kühlergrill der Motorhaube und nach unten eine Verblendung sowie eine Stoßfängerverkleidung vorgesehen. Die verschiedenen Außenhautkarosserieteile grenzen im Bereich der Leuchtenöffnung aneinander an. Hinter dem Leuchtengehäuse (1) ist eine Versteifung (3) sowie eine seitliche Abstützung (4) vorgesehen, die jeweils fest mit der Karosserie verbundene Karosserieteile darstellen.

Das Leuchtengehäuse (1) ist einstückig hergestellt und weist über seinen Umfang verteilt drei Befestigungspunkte (5, 6, 7) auf, mit denen das Leuchtengehäuse (1) mit den angrenzenden Karosserieteilen karosseriefest verbunden ist. Zur Befestigung des Leuchtengehäuses (1) sind an allen drei Befestigungspunkten (5, 6, 7) Schrauben-Mutter-Verbindungen gewählt, die koaxial zu Befestigungsachsen (31, 32, 33) der Befestigungpunkte (5, 6, 7) ausgerichtet sind. Die Befestigungsachse (31) des Befestigungspunktes (5) verläuft horizontal und quer zur Fahrzeuglängsrichtung, die Befestigungsachse (32) des Befestigungspunktes (6) verläuft etwa vertikal und quer zur Fahrzeuglängsrichtung und die Befestigungsachse (33) des Befestigungspunktes (7) verläuft horizontal und in Fahrzeuglängsrichtung. Das Leuchtengehäuse (1) ist in jedem Befestigungspunkt (5, 6, 7) (Fig. 2 bis 4) mit einem einstückigen Befestigungsansatz (17, 20, 26) versehen, in dem jeweils eine zur jeweiligen Befestigungsachse (31, 32, 33) koaxiale Gewindebohrung vorgesehen ist. Im Bereich aller drei Befestigungspunkte (5, 6, 7) ist in den jeweiligen Befestigungsansatz (17, 20, 26) eine Buchsenschraube (16, 24, 27) eingeschraubt, deren axiale Länge jeweils größer ist als die axiale Länge der zugehörigen Gewindebohrung. Jede Buchsenschraube (16, 24, 27) ragt daher zu beiden Seiten aus der Gewindebohrung und damit aus dem jeweiligen Befestigungsansatz (17, 20, 26) heraus. Jede Buchsenschraube (16, 24, 27) ist als hülsenförmige Buchse ausgebildet um mit einem dem Innengewinde der Gewindebohrung entsprechenden Außengewinde versehen. An ihrem nach außen gerichteten Stirnende ist jede Buchsenschraube (16, 24, 27) mit außenliegenden Werkzeugangriffsflächen versehen, um ein Hinein- oder Herausschrauben der Buchsenschraube relativ zu dem jeweiligen Befestigungsansatz zu ermöglichen. An ihrem gegenüberliegenden, inneren Stirnende stützt sich jede Buchsenschraube (16, 24, 27) karosseriefest an einer entsprechenden Halterung ab. Bei dem Befestigungspunkt (5) (Fig. 2) ist dies eine Halteplatte (8), die in einer kotflügelfesten Haltelasche (11) mittels einer Senkblechschraube (12) und einer Blechmutter (13) befestigt ist. Die Haltelasche (11) ist in nicht dargestellter Weise fest mit dem Kotflügel (2) verbunden. Als Positionierhilfe weist die Halteplatte (8) einen Zapfen (19) auf, der sich in einer entsprechenden Aussparung der Haltelasche (11) und an dem Kotflügel (2) abstützt. Koaxial zu der Befestigungsachse (31) des Befestigungspunktes (5) ist in der Halteplatte (8) eine Buchse (18) vorgesehen, deren Innen- und Außendurchmesser auf die Buchsenschraube (16) abgestimmt ist. Die gegenüberliegenden Stirnseiten der Buchse (18) fluchten bündig mit den Außenflächen der Halteplatte (8). Auf Höhe der Buchse (18) und damit koaxial zur Befestigungsachse (31) ist in der Haltelasche (11) eine Aufnahmeöffnung vorgesehen, durch die eine Blechschraube (15) nach hinten hindurchragt. Die Blechschraube (15) weist einen Sechskantkopf auf, der sich auf der äußeren Stirnseite der Buchsenschraube (16) abstützt.

Auf der der Halteplatte (8) gegenüberliegenden Rückseite der Haltelasche (11) ist die Blechschraube (15) mit einer Blechmutter (14) verschraubt, wodurch die Buchsenschraube (16) und damit auch das Leuchtengehäuse (1) relativ zu der Halteplatte (8) und damit auch relativ zu dem Kotflügel (2) fixiert wird. Die Aufnahmeöffnung in der Haltelasche (11) ist wesentlich größer als der Außendurchmesser der Blechschraube (15), so daß die aus der Blechschraube (15) und der Blechmutter (14) gebildete Schrauben-Mutter-Verbindung relativ zur Befestigungsachse (31) radial verschiebbar ist und Toleranzen ausgleichen kann. Voraussetzung für eine radiale Verschiebung der Schrauben-Mutter-Verbindung und damit des gesamten Befestigungspunktes (5) ist eine gewisse Beweglichkeit der Halteplatte (8). Aus diesem Grund ist die Halteplatte (8) mittels der Blechschraube (12) und der Blechmutter (13) ebenfalls im Bereich einer Aufnahmeöffnung mit der Haltelasche (11) verbunden, die wesentlich größer ist als der Durchmesser der Blechschraube (12). Auf der der Befestigungsachse gegenüberliegenden Seite der Blechschraube (12) ist eine weitere Bohrung in der Halteplatte (8) vorgesehen, die nicht näher bezeichnet ist. Auch diese kann bei Bedarf je nach der Größe des Toleranzausgleichs zur Befestigung der Halteplatte (8) an der Haltelasche (11) herangezogen werden.

Die Befestigungs- und Justiereinrichtung im Bereich des Befestigungspunktes (6) (Fig. 3) entspricht im wesentlichen der Befestigungs- und Justiereinrichtung, wie sie anhand der Fig. 2 beschrieben wurde. Der Befestigungsansatz (20) des Leuchtengehäuses (1) ist mittels einer Verstärkungsrippe (21) versteift und mit einer Gewindebohrung versehen, in die die Buchsenschraube (24) eingeschraubt ist. Die Buchsenschraube (24) stützt sich auf einer Blechmutter (23) ab, die auf eine karosseriefeste Haltelasche aufgeschoben ist, die nicht näher bezeichnet ist. Die Blechmutter (23) ist klammerartig ausgebildet und von einem freien Stirnende der Haltelasche auf diese aufschiebbar. In der Haltelasche ist eine Aufnahmeöffnung für eine Blechschraube (22) vorgesehen, deren Durchmesser wesentlich größer ist als der Außendurchmesser der Blechschraube (22). Zur Befestigung des Leuchtengehäuses (1) im Bereich des Befestigungsansatzes (20) wird zunächst die Blechmutter (23) auf die Haltelasche aufgeschoben und anschließend die Blechschraube (22), die mit einem Sechskantkopf versehen ist, von oben durch die Buchsenschraube (24) hindurchgesteckt und leicht in der Blechmutter (23) angezogen. Die Verschraubung darf dabei lediglich so angezogen werden, daß noch eine Relativdrehbewegung zwischen Buchsenschraube (24) und Blechschraube (22) möglich ist. Durch ein entsprechendes Verdrehen der Buchsenschraube (24) ist es nun möglich, den Abstand des Befestigungsansatzes (20) relativ zur Haltelasche und zur Blechmutter (23) zu justieren. Der Befestigungsansatz (20) und damit das Leuchtengehäuse (1) werden daher zunächst axial entlang der Befestigungsachse (32) justiert. Da die Blechmutter (23) noch nicht fest auf der Haltelasche fixiert ist, ist es möglich, den gesamten Befestigungspunkt (6) radial zur Befestigungsachse (32) zu verschieben. Sobald die richtige Position erreicht ist, wird in einfacher Weise die Blechschraube (22) festgezogen, wodurch das Leuchtengehäuse (1) im Befestigungspunkt (6) karosseriefest befestigt ist.

Im Befestigungspunkt (7) weist das Leuchtengehäuse (1) einen Befestigungsansatz (26) auf, der ebenfalls einstückig mit dem Leuchtengehäuse ist. Im Bereich des Befestigungspunktes (7) ist an der Abstützung (4) ein Haltewinkel vorgesehen, mit dem eine Schweißschraube (25) verschweißt ist. Die Schweißschraube (25) ragt lotrecht nach außen von dem Haltewinkel und damit koaxial zur Befestigungsachse (33) des Befestigungspunktes (7) ab. Die Schweißschraube (25) ist somit starr mit dem Haltewinkel und der Abstützung (4) verbunden und damit karosseriefest angeordnet. In den Befestigungsansatz (26) des Leuchtengehäuses (1) ist eine Buchsenschraube (27) eingeschraubt, die einen Hohlraum (28) mit einem großen Innendurchmesser aufweist. Der Innendurchmesser des Hohlraumes (28) ist wesentlich größer als der Außendurchmesser der Schweißschraube (25), so daß der Hohlraum (28) um die Schweißschraube (25) einen im wesentlichen koaxialen Ringraum als Toleranzausgleich bildet. Nach außen wird der Hohlraum (28) durch eine Stützscheibe (29) abgedeckt, die auf die äußere Stirnseite der Buchsenschraube (28) aufgelegt ist. Die Stützscheibe (29) weist eine Bohrung auf, durch die die Schweißschraube (25) hindurchragt. Die Stützscheibe (29) ist mittels einer Sechskantmutter (30) auf der Buchsenschraube (27) gehalten. Zur Befestigung und Justierung des Leuchtengehäuses (1) in dem Befestigungspunkt (7) wird zunächst die in den Befestigungsansatz (26) hineingeschraubte Buchsenschraube (27) über die Schweißschraube (25) gestülpt. Anschließend wird die Stützscheibe (29) auf die Schweißschraube (25) aufgeschoben und mittels der Sechskantmutter (30) auf dieser gesichert, wobei sie sich auf der äußeren Stirnseite der Buchsenschraube (27) abstützt. Da der durch den Hohlraum (28) gebildete Ringraum in radialer Richtung zur Befestigungsachse (33) einen genügenden Toleranzausgleich ermöglicht, wird in einfacher Weise die exakte radiale Positionierung des Leuchtengehäuses (1) gesucht. Selbstverständlich wurde durch ein entsprechendes Verdrehen der Buchsenschraube (27) zuvor der axiale Toleranzausgleich des Leuchtengehäuses (1) im Befestigungspunkt (7) erzielt. Nachdem das Leuchtengehäuse (1) im Befestigungspunkt (7) in allen Richtungen exakt justiert ist, wird in einfacher Weise die Sechskantmutter (30) fest angezogen, wodurch der Befestigungsansatz (6) und damit das Leuchtengehäuse (1) sicher an der karosseriefesten Abstützung (4) befestigt sind.

## Patentansprüche

1. Leuchtengehäuse (1), das in eine zwischen wenigstens zwei Karosserieteilen (2) vorgesehene Leuchtenöffnung einsetzbar und an drei zueinander beabstandeten Befestigungspunkten (5, 6, 7) im Bereich eines Außenumfangs des Leuchtengehäuses (1) karosseriefest verbindbar ist, wobei jedem Befestigungspunk (5, 6, 7) eine Justiereinrichtung zum Zentrieren des Leuchtengehäuses (1) in der Leuchtenöffnung und relativ zu den Karosserieteilen (2) zugeordnet ist,
**dadurch gekennzeichnet, daß**
jede Justiereinrichtung (14, 15, 16; 22, 23, 24; 25, 27, 28, 29, 30) radial und axial zu der Befestigungsachse (31, 32, 33) des jeweiligen Befestigungspunkts (5, 6, 7) justierbar ist, und daß die Befestigungsachsen (31, 32, 33) und damit die Justiereinrichtungen untereinander (14, 15, 16; 22, 23, 24; 25, 27, 28, 29, 30) entsprechend einem dreidimensionalen Koordinatensystem jeweils lotrecht zueinander ausgerichtet sind.

2. Leuchtengehäuse nach Anspruch 1,
**dadurch gekennzeichnet, daß**
leuchtengehäuseseitige Befestigungselemente (17, 20, 26) im Bereich der Befestigungspunkte (5, 6, 7) jeweils eine Gewindebohrung aufweisen, in die eine Buchsenschraube (16, 24, 27) verstellbar eingeschraubt ist, deren axiale Länge größer ist als die Gewindebohrung und die mittels einer Schrauben-Mutter-Verindung (14, 15; 22, 23; 25, 29, 30) karosseriefest fixierbar ist.

3. Leuchtengehäuse nach Anspruch 2,
**dadurch gekennzeichnet, daß**
als Mutter der Schrauben-Mutter-Verbindung eine auf einem karosseriefesten Halter (11) verschiebbare, klammerartige Blechmutter (14, 23) vorgesehen ist, wobei die Aufnahmeöffnung in dem Halter (11) größer ist als der Durchmesser (15, 22) der Schraube (15) der Schrauben-Mutter-Verbindung.

## Claims

1. A lamp housing (1) which can be fitted in a lamp mounting-orifice between at least two body work parts (2) and joined to the bodywork at three mounting points (5, 6, 7) in the region of an outer periphery of the lamp housing (1) spaced at a distance apart, an adjusting device being assigned to each mounting point (5, 6, 7) for centring the lamp housing (1) in the lamp mounting-orifice and relative to the bodywork parts (2),
**characterised in that**
each adjusting device (14, 15, 16; 22, 23, 24; 25, 27, 28, 29, 30) can be adjusted radially and axially relative to the mounting axis (31, 32, 33) of the respective mounting point (5, 6, 7) and that the mounting axes (31, 32, 33) and hence the adjusting devices (14, 15, 16; 22, 23, 24; 25, 27, 28, 29, 30) are arranged perpendicular to one another respectively in a three-dimensional system of coordinates.

2. A lamp housing as claimed in claim 1,
**characterised in that**
mounting elements (17, 20, 26) on the lamp housing side in the region of the mounting points (5, 6, 7) each have a threaded bore in which a socket screw (16, 24, 27) can be adjustably screwed, the axial length of which is greater than that of the threaded bore, and which can be permanently fixed to the bodywork by means of a screw and nut connection (14, 15; 22, 23; 25, 29, 30).

3. A lamp housing as claimed in claim 2,
**characterised in that**
a clamp-type self-tapping nut (14, 23) slidable on a holder (11) permanently joined to the bodywork is provided as the nut of the screw and nut connection, the mounting orifice in the holder (11) being larger than the diameter (15, 22) of the screw (15) of the screw and nut connection.

## Revendications

1. Boîtier de luminaire (1) qui peut s'insérer dans une ouverture pour luminaire prévue entre au moins deux pièces de carrosserie (2) et peut se relier, fixe par rapport à la carrosserie, en trois points de fixation (5, 6, 7), situés à distance l'un de l'autre, dans la zone d'une périphérie extérieure du boîtier de luminaire (1), dans le cas duquel, à chaque point de fixation (5, 6, 7) est associé un dispositif de réglage pour centrer le boîtier de luminaire (1) dans l'ouverture pour luminaire et par rapport aux pièces de carrosserie (2),
caractérisé par le fait
que chaque dispositif de réglage (14, 15, 16 ; 22, 23, 24 ; 25, 27, 28, 29, 30) peut se régler radialement et axialement par rapport à l'axe de fixation (31, 32, 33) du point de fixation respectif (5, 6, 7) et que les axes de fixation (31, 32, 33), et donc les dispositifs de réglage, sont orientés l'un par rapport à l'autre (14, 15, 16 ; 22, 23, 24 ; 25, 27, 28, 29, 30) respectivement perpendiculairement l'un à l'autre, de façon correspondant à un système de coordonnées tridimensionnel.

2. Boîtier de luminaire selon la revendication 1,
caractérisé par le fait
que des éléments de fixation (17, 20, 26) situés du côté boîtier de luminaire présentent chacun dans la zone des points de fixation (5, 6, 7) un taraudage dans lequel peut se visser, avec réglage, un manchon fileté (16, 24, 27) dont la longueur axiale est supérieure à celle du taraudage et qui peut se fixer par rapport à la carrosserie au moyen d'une liaison vis-écrou (14, 15 ; 22, 23 ; 25, 29 30).

3. Boîtier de luminaire selon la revendication 2,
caractérisé par le fait
que comme écrou de la liaison vis-écrou est prévu un écrou à tôle (14, 23), en forme d'agrafe, qui peut coulisser sur une languette de maintien (11) fixe par rapport à la carrosserie, l'ouverture de réception dans la languette de maintien (11) étant supérieure au diamètre (15, 22) de la vis (15) de la liaison vis-écrou.
